(19) Europäisches Patentamt / European Patent Office / Office européen des brevets

(11) **EP 3 715 819 A1**

(12) **EUROPEAN PATENT APPLICATION**

(43) Date of publication:
**30.09.2020 Bulletin 2020/40**

(21) Application number: **19165445.8**

(22) Date of filing: **27.03.2019**

(51) Int Cl.:
**G01M 11/06** (2006.01)  **F21S 41/141** (2018.01)
**B60Q 1/04** (2006.01)  **G06K 9/00** (2006.01)
**G06T 7/00** (2017.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Valeo Vision**
**93012 Bobigny Cedex (FR)**

(72) Inventors:
• ALMEHIO, Yasser
93012 BOBIGNY Cedex (FR)
• KANJ, Ali
93012 BOBIGNY Cedex (FR)

(74) Representative: **Valeo Vision**
**IP Department**
**34, rue Saint André**
**93012 Bobigny (FR)**

(54) **METHOD FOR CORRECTING A LIGHT PATTERN, AUTOMOTIVE LIGHTING DEVICE AND AUTOMOTIVE LIGHTING ASSEMBLY**

(57) The invention provides a method for correcting a first light pattern provided by a lighting device (1) with a matrix of light sources (2). This method comprising the steps of providing a test light pattern (10), instructing the light sources (2) to project the test light pattern (10), choosing some key points (11) in the test light pattern (10) and identify the projection of the key points (21) in the projected light pattern (20), comparing the spatial position of the projection of the key points (21) with respect to the spatial position of the key points (11) in the test light pattern (10), thus obtaining a distortion factor and finally applying a correction factor to correct the distortion factor, thus obtaining a corrected light pattern (5), the correction factor being related to the distortion factor obtained in the previous step. The invention also provides an automotive lighting device (1) and an automotive lighting assembly.

Fig. 2c

Printed by Jouve, 75001 PARIS (FR)

**Description**

**TECHNICAL FIELD**

This invention is related to the field of automotive lighting devices, and more particularly, to the way light patterns are managed.

**STATE OF THE ART**

Digital lighting devices are being increasingly adopted by car makers for middle and high market products.

These digital lighting devices usually rely on pixelated technologies. Such digital light sources usually comprise a stripe or a matrix of LEDs and an optical system with different lenses behind, which project the light emitted by the LEDs. These lenses may cause some distortion in the projected beam, which may be perceived by the user. The size and shape of this distortion depend on the lens type (barrel, pincushion...). Further, the perception of this physical issue is relatively proportional to the module resolution, the higher number of LEDs, the greater distortion effect in the projected beam.

This problem has been assumed until now, but a solution therefor is provided.

**SUMMARY OF THE INVENTION**

The invention provides an alternative solution for improving the aforementioned geometrical problem by a method for correcting a light pattern according to claim 1, an automotive lighting device according to claim 12 and an automotive lighting assembly according to claim 14. Preferred embodiments of the invention are defined in dependent claims.

Unless otherwise defined, all terms (including technical and scientific terms) used herein are to be interpreted as is customary in the art. It will be further understood that terms in common usage should also be interpreted as is customary in the relevant art and not in an idealised or overly formal sense unless expressly so defined herein.

In this text, the term "comprises" and its derivations (such as "comprising", etc.) should not be understood in an excluding sense, that is, these terms should not be interpreted as excluding the possibility that what is described and defined may include further elements, steps, etc.

In a first inventive aspect, the invention provides a method for correcting a light pattern provided by a lighting device with a matrix of light sources, the method comprising the steps of

a) providing a test light pattern;
b) instructing the light sources to project the test light pattern, thus obtaining a projected light pattern;
c) choosing some key points in the test light pattern and identify the projection of the key points in the projected light pattern;
d) comparing the spatial position of the projection of the key points with respect to the spatial position of the key points in the test light pattern, thus obtaining a distortion factor;
e) applying a correction factor to correct the distortion factor, thus obtaining a corrected light pattern, the correction factor being related to the distortion factor obtained in the previous step.

This method allows an in-situ or an external calibration of the distortion of an automotive light pattern, wherein the distortion factor of the corrected light pattern is closer to a straight pattern than the original light pattern.

In some particular embodiments, in the step e), the correction factor is a corrective distortion factor inverse to the distortion factor obtained in step d).

The correction factor aims to compensate the distortion of the originally projected light pattern. As a consequence, one way of achieving this goal is establishing a distortion scale in two directions: barrel-like and pin-cushion direction. If a barrel-like distortion map is selected as the closest image to the real distorted map, a pin-cushion factor of the same value will be applied to the real light pattern to compensate it.

In some particular embodiments, the method further comprises the step of sharpening the obtained projected light pattern between steps b) and c).

An intermediate sharpening of the projected image helps to achieve a better identification of the key points in the projected light pattern.

In some particular embodiments, the test light pattern comprises a black and white pattern.

A black and white pattern is suitable for an easy identification and comparison of key points.

In some particular embodiments, the test light pattern comprises black polygons over a white background or white polygons over a black background. In some particular embodiments, the key points comprise vertices of the polygons.

Polygons' vertices are convenient to be used as key points, due to the natural sharpness of their shape.

In some particular embodiments, the test light pattern comprises a chessboard pattern.

A chessboard pattern is a regular pattern which eases the identification and reference of the key points.

In some particular embodiments, step d) comprises the identification of an optic centre in the test light pattern, wherein the position of the projected optical centre in the projected light pattern is the same as the position of the optical centre in the test light pattern.

The optic centre is very useful to measure the references with respect to a central point.

In some particular embodiments, the step d) further comprises the sub-steps of

identifying the coordinates of the key points of the test light pattern with respect to the optical centre;
identifying the coordinates of the projected key points of the projected light pattern with respect to the projected optical centre; and
calculating the distortion factor which depends on the relation between the coordinates of the projected key points with respect to the coordinates of the key points.

In some particular embodiments, the sub-step of calculating the distortion factor is carried out by means of expressing the relation between the coordinates of the projected key points with respect to the coordinates of the key points by means of the expression

$$x_2 = x_1 \cdot (1 + k_1 r^2 + k_2 r^4) + 2p_1 x_1 y_1 + p_2 \cdot (r^2 + 2x_1^2)$$

$$y_2 = y_1 \cdot (1 + k_1 r^2 + k_2 r^4) + 2p_2 x_1 y_1 + p_1 \cdot (r^2 + 2y_1^2)$$

wherein

$x_1$ and $y_1$ are the coordinates of a point in the test light pattern, which are known
$x_2$ and $y_2$ are the coordinates of a point in the projected light pattern, which are known;

$$r = \sqrt{x_1^2 + y_1^2};$$

and
$k_1$, $k_2$, $p_1$ and $p_2$ are distortion coordinates, which will be calculated from an equation system formed by comparing the coordinates of the test light pattern and the projected light pattern in a plurality of key points.

Since the method knows the coordinates of each key point in the original test light pattern ($x_1$ and $y_1$) and the coordinates of each key point in the projected light pattern ($x_2$ and $y_2$), an equation system may be defined to calculate the distortion coordinates $k_1$, $k_2$, $p_1$ and $p_2$. This is an easy way of obtaining the distortion factor and then apply an inverse distortion to the projected light pattern to obtain the corrected light pattern upon projection, as the optical lens of the lighting module will apply the straight distortion.

In some particular embodiments, the method further comprises the step of recording a calibration map with the correction factor.

Once the distortion is identified by the calculation of the distortion coordinates, they may be stored in the PCM or a memory comprised in the lighting module, so that the PCM software may use them later for a dynamic correction.

In a second inventive aspect, the invention provides an automotive lighting device comprising

a matrix arrangement of solid-state light sources, intended to provide a light pattern;
a calibrator for performing the steps of the method according to the first inventive aspect.

This lighting device provides the advantageous functionality of auto-calibrating the distortion of the light pattern provided.

In some particular embodiments, the matrix arrangement comprises at least 2000 solid-state light sources.

The term "solid state" refers to light emitted by solid-state electroluminescence, which uses semiconductors to convert electricity into light. Compared to incandescent lighting, solid state lighting creates visible light with reduced heat generation and less energy dissipation. The typically small mass of a solid-state electronic lighting device provides for greater resistance to shock and vibration compared to brittle glass tubes/bulbs and long, thin filament wires. They also eliminate filament evaporation, potentially increasing the life span of the illumination device. Some examples of these types of lighting comprise semiconductor light-emitting diodes (LEDs), organic light-emitting diodes (OLED), or polymer light-emitting diodes (PLED) as sources of illumination rather than electrical filaments, plasma or gas.

A matrix arrangement is a typical example for this method. The rows may be grouped in projecting distance ranges and each column of each group represent an angle interval. This angle value depends on the resolution of the matrix arrangement, which is typically comprised between 0.01º per column and 0.5º per column. As a consequence, the light intensity of each pixel may be adapted if necessary to generate a straighter pattern.

In a third inventive aspect, the invention provides an automotive lighting assembly comprising

an automotive lighting device; and
an external calibrator for performing the steps of the method according to the first inventive aspect; and
an external corrector to apply the correction factor to the light pattern.

This assembly may be used in the manufacturing assembly line of a vehicle, to provide a calibrated light pattern just out of the line.

## BRIEF LIST OF DRAWINGS

To complete the description and in order to provide for a better understanding of the invention, a set of drawings is provided. Said drawings form an integral part of the description and illustrate an embodiment of the invention, which should not be interpreted as restricting the scope of the invention, but just as an example of how the invention can be carried out. The drawings comprise the following figures:

Figure 1 shows a general perspective view of an automotive lighting device according to the invention.

Figures 2a to 2d represent steps of a method according to the invention.

Figure 3 shows an automotive lighting assembly according to the invention.

In these figures, the following reference numbers have been used:

| 1 | Lighting device |
| 2 | LED |
| 3 | Calibrator |
| 4 | Polygons |
| 5 | Corrected light pattern |
| 10 | Test light pattern |
| 11 | Key points of the test light pattern |
| 12 | Optic centre in the test light pattern |
| 20 | Projected light pattern |
| 21 | Key points of the projected light pattern |
| 22 | Optic centre in the projected light pattern |
| 30 | External calibrator |
| 31 | External corrector |
| 100 | Automotive vehicle |

## DETAILED DESCRIPTION OF THE INVENTION

The example embodiments are described in sufficient detail to enable those of ordinary skill in the art to embody and implement the systems and processes herein described. It is important to understand that embodiments can be provided in many alternate forms and should not be construed as limited to the examples set forth herein.

Accordingly, while embodiment can be modified in various ways and take on various alternative forms, specific embodiments thereof are shown in the drawings and described in detail below as examples. There is no intent to limit to the particular forms disclosed. On the contrary, all modifications, equivalents, and alternatives falling within the scope of the appended claims should be included.

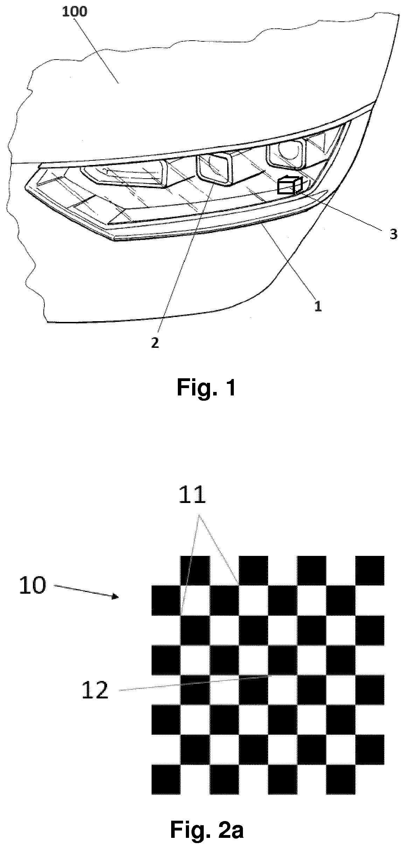

Figure 1 shows a general perspective view of an automotive lighting device according to the invention.

This lighting device 1 is installed in an automotive vehicle 100 and comprises

a matrix arrangement of LEDs 2, intended to provide a light pattern;
a calibrator 3 to carry out an in-situ calibration of the geometrical shape of the light pattern provided by the matrix arrangement of LEDs 2.

This matrix configuration is a high-resolution module, having a resolution greater than 2000 pixels. However, no restriction is attached to the technology used for producing the projection modules.

A first example of this matrix configuration comprises a monolithic source. This monolithic source comprises a matrix of monolithic electroluminescent elements arranged in several columns by several rows. In a monolithic matrix, the electroluminescent elements can be grown from a common substrate and are electrically connected to be selectively activatable either individually or by a subset of electroluminescent elements. The substrate may be predominantly made of a semiconductor material. The substrate may comprise one or more other materials, for example non-semiconductors (metals and insulators). Thus, each electroluminescent element/group can form a light pixel and can therefore emit light when its/their material is supplied with electricity. The configuration of such a monolithic matrix allows the arrangement of selectively activatable pixels very close to each other, compared to conventional light-emitting diodes intended to be soldered to printed circuit boards. The monolithic matrix may comprise electroluminescent elements whose main dimension of height, measured perpendicularly to the common substrate, is substantially equal to one micrometre.

The monolithic matrix is coupled to the control centre so as to control the generation and/or the projection of a pixilated light beam by the matrix arrangement. The control centre is thus able to individually control the light emission of each pixel of the matrix arrangement.

Alternatively to what has been presented above, the matrix arrangement may comprise a main light source coupled to a matrix of mirrors. Thus, the pixelated light source is formed by the assembly of at least one main light source formed of at least one light emitting diode emitting light and an array of optoelectronic elements, for example a matrix of micro-mirrors, also known by the acronym DMD, for "Digital Micro-mirror Device", which directs the light rays from the main light source by reflection to a projection optical element. Where appropriate, an auxiliary optical element can collect the rays of at least one light source to focus and direct them to the surface of the micro-mirror array.

Each micro-mirror can pivot between two fixed positions, a first position in which the light rays are reflected towards the projection optical element, and a second position in which the light rays are reflected in a different direction from the projection optical element. The two fixed positions are oriented in the same manner for all the micro-mirrors and form, with respect to a reference plane supporting the matrix of micro-mirrors, a characteristic angle of the matrix of micro-mirrors defined in its specifications. Such an angle is generally less than 20° and may be usually about 12°. Thus, each micro-mirror reflecting a part of the light beams which are incident on the matrix of micro-mirrors forms an elementary emitter of the pixelated light source. The actuation and control of the change of position of the mirrors for selectively activating this elementary emitter to emit or not an elementary light beam is controlled by the control centre.

In different embodiments, the matrix arrangement may comprise a scanning laser system wherein a laser light source emits a laser beam towards a scanning element which is configured to explore the surface of a wavelength converter with the laser beam. An image of this surface is captured by the projection optical element.

The exploration of the scanning element may be performed at a speed sufficiently high so that the human eye does not perceive any displacement in the projected image.

The synchronized control of the ignition of the laser source and the scanning movement of the beam makes it possible to generate a matrix of elementary emitters that can be activated selectively at the surface of the wavelength converter element. The scanning means may be a mobile micro-mirror for scanning the surface of the wavelength converter element by reflection of the laser beam. The micro-mirrors mentioned as scanning means are for example MEMS type, for "Micro-Electro-Mechanical Systems". However, the invention is not limited to such a scanning means and can use other kinds of scanning means, such as a series of mirrors arranged on a rotating element, the rotation of the element causing a scanning of the transmission surface by the laser beam.

In another variant, the light source may be complex and include both at least one segment of light elements, such as light emitting diodes, and a surface portion of a monolithic light source.

Figures 2a to 2d represent steps of a method according to the invention.

Figure 2a shows a test light pattern 10. In this particular embodiment, this test light pattern 10 follows the figures of a chessboard. The black and white squares are easy to identify, and offer the vertices, which will be used as key points 11 in the method which will be described below.

An optic centre 12 is identified in the test light pattern 10 as the central point of this pattern 10.

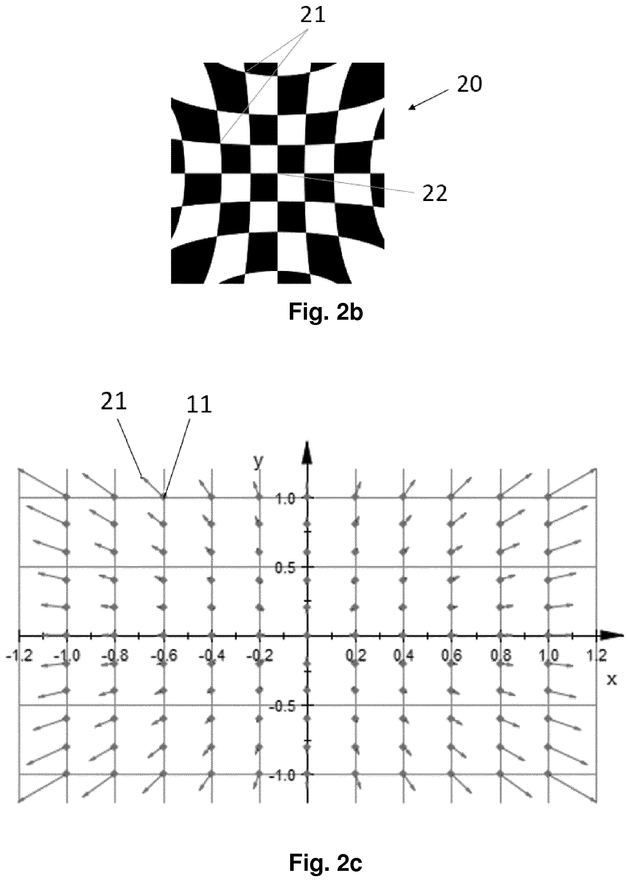

Figure 2b shows a projected light pattern 20, which is the result of the instruction of projecting the test light pattern against a surface. A camera may acquire this image and sharpen it, so that the key points 21 may be identified and referenced to the key points 11 of the original test light pattern, shown in figure 2a. The position of the projected optical centre 22 in the projected light pattern 20 is the same as the position of the optical centre 12 in the test light pattern 10; this point is considered as the reference origin for the key points 21.

Figure 2c shows a scheme of the position of the key points. The dots show the position of the key points 11 in the original test light pattern, while the arrows show the displacement of these key points 21 when they are projected in the projected light pattern. As a consequence, a system of coordinates is obtained for each key point. $x_1$ and $y_1$ are the coordinates of a point in the test light pattern with respect to the optical centre, while $x_2$ and $y_2$ are the coordinates of the same key point in the projected light pattern with respect to the optical centre.

The following equation system may be arranged for each pair of test key point 11 and projected key point 21:

$$x_2 = x_1 \cdot (1 + k_1 r^2 + k_2 r^4) + 2p_1 x_1 y_1 + p_2 \cdot (r^2 + 2x_1^2)$$

$$y_2 = y_1 \cdot (1 + k_1 r^2 + k_2 r^4) + 2p_2 x_1 y_1 + p_1 \cdot (r^2 + 2y_1^2)$$

wherein

$$r = \sqrt{x_1^2 + y_1^2};$$

and

$k_1$, $k_2$, $p_1$ and $p_2$ are distortion coordinates.

Since the method has previously evaluated the coordinates of each key point, first in the original test light pattern ($x_1$ and $y_1$) and later in the projected light pattern ($x_2$ and $y_2$), an equation system may be defined to calculate the values o the distortion coordinates $k_1$, $k_2$, $p_1$ and $p_2$).

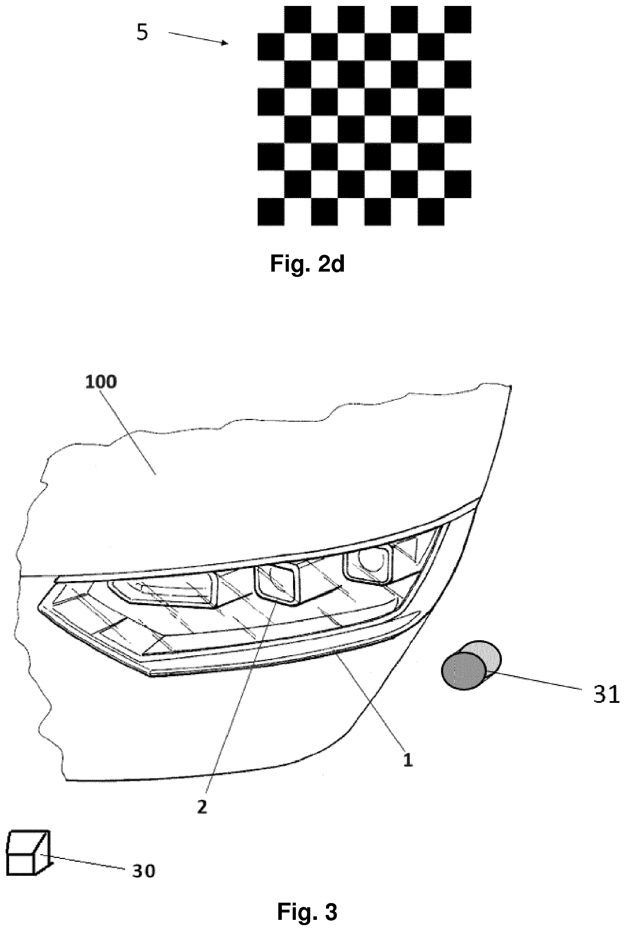

As shown in figure 2d, once these coordinates have been calculated, a correction factor must be applied to the projected light pattern to obtain a corrected light pattern 5. This correction factor is the inverse of the distortion calculated in the previous steps.

$$x_2 = \frac{x_1}{1 + k_1 r^2 + k_2 r^4} + 2\frac{p_1}{x_1 y_1} + \frac{p_2}{r^2 + 2x_1^2}$$

$$y_2 = \frac{y_1}{1 + k_1 r^2 + k_2 r^4} + 2\frac{p_2}{x_1 y_1} + \frac{p_1}{r^2 + 2y_1^2}$$

Once the distortion is identified by the calculation of the distortion coordinates, they may be stored in the PCM or a memory comprised in the lighting module, so that the PCM software may use them later for a dynamic correction.

Figure 3 shows an automotive lighting assembly according to the invention. In this case, the automotive lighting device 1 is a standard automotive lighting device and there is an external calibrator 30 which is suitable for performing some of the steps of the method described above, and an external corrector 31 to perform the correction steps. This makes it possible to use this invention also in standard lighting devices which does not comprise an embedded calibrator.

## Claims

1. Method for correcting a light pattern provided by a lighting device (1) with a matrix of light sources (2), the method comprising the steps of

   a) providing a test light pattern (10);
   b) instructing the light sources (2) to project the test light pattern (10), thus obtaining a projected light pattern (20);
   c) choosing some key points (11) in the test light pattern (10) and identify the projection of the key points (21) in the projected light pattern (20);
   d) comparing the spatial position of the projection of the key points (21) with respect to the spatial position of the key points (11) in the test light pattern (10), thus obtaining a distortion factor;
   e) applying a correction factor to correct the distortion factor, thus obtaining a corrected light pattern (5), the correction factor being related to the distortion factor obtained in the previous step.

2. Method according to any of the preceding claims, wherein, in the step e), the correction factor is a corrective distortion factor inverse to the distortion factor obtained in step d).

3. Method according to any of the preceding claims, further comprising the step of sharpening the obtained projected light pattern between steps b) and c).

4. Method according to any of the preceding claims, wherein the test light pattern comprises a black and white pattern.

5. Method according to any of the preceding claims, wherein the test light pattern (10) comprises black polygons (4) over a white background or white polygons over a black background.

6. Method according to claim 5, wherein the test light pattern (10) comprises a chessboard pattern.

7. Method according to any of claims 5 or 6, wherein the key points (11) comprise vertices of the polygons (4).

8. Method according to claim 7, wherein step d) comprises the identification of an optic centre (12) in the test light pattern (10), wherein the position of the projected optical centre (22) in the projected light pattern (20) is the same as the position of the optical centre (12) in the test light pattern (10).

9. Method according to claim 8, wherein the step d) further comprises the sub-steps of

Identifying the coordinates of the key points (11) of the test light pattern (10) with respect to the optical centre (12);
Identifying the coordinates of the projected key points (21) of the projected light pattern (20) with respect to the projected optical centre (22);
Calculating the distortion factor which depends on the relation between the coordinates of the projected key points (21) with respect to the coordinates of the key points (11).

10. Method according to claim 9, wherein the sub-step of calculating the distortion factor is carried out by means of expressing the relation between the coordinates of the projected key points (21) with respect to the coordinates of the key points (11) by means of the expression

$$x_2 = x_1 \cdot (1 + k_1 r^2 + k_2 r^4) + 2 p_1 x_1 y_1 + p_2 \cdot (r^2 + 2 x_1^2)$$

$$y_2 = y_1 \cdot (1 + k_1 r^2 + k_2 r^4) + 2 p_2 x_1 y_1 + p_1 \cdot (r^2 + 2 y_1^2)$$

wherein

$x_1$ and $y_1$ are the coordinates of a point in the test light pattern with respect to the optical centre, which are known
$x_2$ and $y_2$ are the coordinates of a point in the projected light pattern with respect to the optical centre, which are known;

$$r = \sqrt{x_1^2 + y_1^2};$$

and
$k_1, k_2, p_1$ and $p_2$ are distortion coordinates, which will be calculated from an equation system formed by comparing the coordinates of the test light pattern and the projected light pattern in a plurality of key points.

11. Method according to any of the preceding claims, further comprising the step of f) recording a calibration map with the correction factor.

12. Automotive lighting device comprising

a matrix arrangement of solid-state light sources (2), intended to provide a light pattern;
a calibrator for performing the steps of the method according to any of the preceding claims.

13. Automotive lighting device according to claim 12, wherein the matrix arrangement comprises at least 2000 solid-state light sources (2).

14. Automotive lighting assembly comprising

an automotive lighting device (1);
an external calibrator (30) for performing the steps of the method according to any of claims 1 to 11.

100

2

1

3

**Fig. 1**

11

10

12

**Fig. 2a**

**Fig. 2b**

**Fig. 2c**

**Fig. 2d**

**Fig. 3**

Europäisches
Patentamt

European
Patent Office

Office européen
des brevets

## EUROPEAN SEARCH REPORT

**Application Number**

EP 19 16 5445

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 10 2018 101686 B3 (PORSCHE AG [DE]) 24 January 2019 (2019-01-24) * abstract * * paragraphs [0006], [0016], [0034] * ----- | 1-14 | INV. G01M11/06 F21S41/141 B60Q1/04 G06K9/00 G06T7/00 |
| X | DE 10 2017 211699 A1 (HELLA KGAA HUECK & CO [DE]) 10 January 2019 (2019-01-10) * abstract * * paragraphs [0045], [0054] - [0062], [0101], [0135] * ----- | 1-14 | |

**TECHNICAL FIELDS
SEARCHED     (IPC)**

G01M
F21S
B60Q
G06K
G06T

The present search report has been drawn up for all claims

| Place of search | Date of completion of the search | Examiner |
|---|---|---|
| The Hague | 27 September 2019 | Grewe, Clemens F. |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

.................................................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 19 16 5445

This annex lists the patent family members relating to the patent documents cited in the above-mentioned European search report.
The members are as contained in the European Patent Office EDP file on
The European Patent Office is in no way liable for these particulars which are merely given for the purpose of information.

27-09-2019

| Patent document cited in search report | Publication date | Patent family member(s) | Publication date |
|---|---|---|---|
| DE 102018101686 B3 | 24-01-2019 | CN 110087379 A<br>DE 102018101686 B3 | 02-08-2019<br>24-01-2019 |
| DE 102017211699 A1 | 10-01-2019 | NONE | |

EPO FORM P0459

For more details about this annex : see Official Journal of the European Patent Office, No. 12/82